# EUROPEAN PATENT APPLICATION

(11) **EP 1 690 831 A1**
(43) Date of publication of application: **16.08.2006**
(21) Application number: 05075330.0
(22) Date of filing: 10.02.2005
(51) Int. Cl.: C01B 37/00, C01B 39/04

(54) **Process for the production of a molecular sieve material**

(71) Applicant: Technische Universiteit Delft, 2628 BL Delft (NL)
(72) Inventor: Melian Cabrera, Ignacio V., 2317 PL Leiden (NL); Kapteijn, Frederik, 1447 TK Purmerend (NL); Moulijn, Jacob A., 2517 HB Den Haag (NL)
(74) Representative: Winckels, Johannes Hubertus F.

(57) **Abstract**

The invention concerns a process for the production of a molecular sieve material by growing the molecular sieve material structure in the presence of a template for the pore structure, followed by removal of the template from the molecular sieve material, in which process the template is removed by oxidation of the template material using an oxidising agent.

## Description

The invention concerns a process for the production of a molecular sieve material by growing an inorganic network in the presence of a template for the pore structure, followed by removal of the template from the molecular sieve material.

Molecular sieves, zeolites and mesoporous materials, and their post-synthesis modifications are receiving increased interest in the chemical processing industry. It is expected to contribute to the development of improved catalysts and processes. Not only in the production route itself (oil refinery, petrochemicals and fine chemicals) but also for cleaning technologies. For example, the abatement of nitrous oxide from the nitric acid industry is nowadays an active field of catalyst development based on zeolites.

The preparation of such molecular sieve materials usually involves multiple steps: (i) hydrothermal synthesis of the zeolite using organic templates, (ii) detemplating by thermal treatment, (iii) accommodation of the zeolite to the desired form (usually NH₄- form), (iv) optionally incorporation of a metal ion (ion-exchange), (v) drying and (vi) calcination. Reducing the number of steps will contribute to an improved and faster synthesis process.

Further, the use of thermal treatment for detemplating usually involves heating the material to very high temperatures, which may lead to damage to or at least modification of the material.

It is an object of the present invention to provide a process wherein at least some of these problems have been taken care of, more in particular a process wherein the detemplation does not occur through a thermal treatment. Further, the combination of detemplation and metal ion-exchange is also an object of this invention.

The invention is accordingly directed to a process for the production of a molecular sieve material by growing the molecular sieve material structure in the presence of a template for the pore structure, followed by removal of the template from the molecular sieve material, in which process the template is removed by oxidation of the template material using an oxidising agent dissolved in the medium.

The invention is based on the principle, that it is possible to remove the template material using a very mild treatment of oxidation. It has surprisingly been found that with this process the template is removed easily, while preserving the virgin structure of the material. Further it has been found that it is possible to combine this treatment with ion exchange to obtain a molecular sieve having exchanged metal ions in the lattice, in a one-step process.

The process of the invention is based on oxidation type reaction of the Fenton type, i.e. such as those based on iron catalysed oxidation using hydrogen peroxide.

In the broadest sense of the invention, the template in the molecular sieve material is oxidised using an oxidising agent in liquid state for the template. In a preferred embodiment the oxidising agent is based on the combination of an oxidising material and a catalyst therefore. Suitable oxidising materials are H₂O₂, ozone, nitroxyl compounds, such as TEMPO and peracids such as peracetic acid.

The oxidising action can be enhanced by the use of catalysts therefore. Suitable catalysts and catalyst precursors are ferric and ferrous salts (eg. ferric nitrate, mohr's salt, etc.), copper(II) salts and in general those metal-cation pairs M^{m+}/M^{(m-1)+} which presents a suitable oxidation potential to split-up H₂O₂ in OH˙ radicals (eg. Mn, Al, Si, Pb, Hg and Zn salts). Application of light (photo-assisted process) like UV-Vis also improves the catalytic reaction.

In the most preferred embodiment a combination of iron ions and hydrogen peroxide is used.

Typically, concentrations ranging 10-500 ppm metal, such as Fe in 5-30% H₂O₂ is sufficient to detemplate templated material. More in particular about 250 mL of such a solution suffices for detemplating 1-10 g thereof.

In case it is not wanted that the sample retains the metal catalyst, such as Fe, during the treatment, a solid catalyst containing the metal (or other Fenton catalyst) can be efficiently used. Such a supported (or bound) catalyst can for example be a solid resin having the metal supported thereon.

In case it is intended to include a metal ion in the lattice of the molecular sieve material, which metal does not have (sufficient) catalytic activity towards the oxidation reaction, it is possible to include this metal ion also in the liquid containing the oxidising material and the catalyst therefor. In this way the one metal ion acts as catalyst and the other metal ion is exchanged into the lattice.

Suitable molecular sieves are ZSM-5, and other MFI-type structures, ferrierite (FER), beta (BEA), mordenite (MOR), USY and Y zeolites, mesoporous materials like MCM-41 and SBA-15, and polymeric resins.

The molecular sieve may be prepared using conventional techniques from a template containing synthesis solution. The kind of template to be used, depends on the nature of the molecular sieve material. Preferred templates are quaternary ammonium salts to assemblies of surfactants.

The presented invention has even more advantages for mesoporous materials, a.o. MCM-41, SBA-15. The thermal shock from the removal of large proportions of surfactant produces structural inhomogeneities such as inclusions, voids, cracks and also shrinkage of the unit cell occurs. Especially, thermostability of the material is critical in the presence of steam resulting from the template removal. High temperatures are also unfortunate because the M-OH groups partially condensate. This reduces the immobilizing capacity to graft metals and large functional groups such as enzymes and bio-molecules. Of major concern, high temperatures results in broad pore size distribution upon template removal. Such effects can be avoided by removing the template at low temperatures by using the process of the present invention.

The result of the mild detemplation by OH^{•}-assisted oxidation is a material which preserves its virgin structure. The shrinkage of the unit cell is avoided, the pore size distribution is narrower with a larger pore volume, and the surface is highly hydroxylated as in silica gel. As far as technological aspects are concerned, the method is simple to apply and it can be implemented *in situ* after the hydrothermal synthesis in the batch reactor vessel. The method saves time and equipment since slow calcinations in rotary calciners can be avoided.

The mechanism involved is far from understood at present. Our observations imply that the first step of detemplation involves the dislodgment of entire units of surfactant assemblies (foaming is observed) and then oxidised in solution. Other advantage of the approach is related to the hazards for the disposal of the template after synthesis. The acrid fumes originated from calcination can be avoided since radical oxidation leads to innocuous byproducts H₂O/CO₂.

Detemplated materials in this way present potential benefits as will be discussed below. The method preserves the pristine structure leading to very well-defined materials. The method is generally applicable and we expect that it could be adapted to other structures. The approach allows a very controlled preparation of atomically engineered materials with a defined site environment. The highly hydroxylated surface is potentially attractive to achieve high loading of metals by grafting. The Van der Waals forces due to the OH bridges are anticipated to play an important role to accommodate enzymes and other big organic assemblies. For very-well dispersed noble metals (complexes) active sites, the OH population can be modulated by controlled thermal treatments. In this way the anchoring points can be modulated together with the hydrophilic-hydrophobic behaviour.

The high proportion of hydroxyls combined with the larger pore volume increases its adsorption capacity. Preliminary results on pigment adsorption showed a significant increase for the adsorption of methylene blue, from 374 to 481 µmol/g between the calcined (state of the art) and *detemplated* (according to the invention) sample respectively. This improvement opens new challenges for such structures in drug administration for medical applications by a controlled release of previously adsorbed active components, and aiming to avoid peak concentration upon sudden administration.

Uniform pore size in micelle-templated materials is a critical parameter and a major asset nowadays in chromatography applications like size-exclusion chromatography, normal-phase HPLC, capillary gas chromatography and enantioselective HPLC. Size control at nanometer scale by mild detemplated molecular sieves could open new applications in the separation of bio-molecules.

Basically there are two methods of oxidising the template. In the first, preferred method, the template containing molecular sieve material is contacted with the oxidising agent in liquid state, for example a solution of an iron salt in hydrogen peroxide. However, it is also possible to use a solution of the oxidiser, optionally together with a suitable soluble and solid catalyst, in a suitable solvent, such as water.

In this embodiment the oxidising agent diffuses into the template. Subsequently, the temperature is raised until the oxidation reaction starts and the template is removed as oxidation products, usually innocuous CO₂ and H₂O. The required temperature varies with the nature of the materials used, i.e. template, oxidising material, catalyst and the concentrations thereof. Generally temperatures of between 30 and 150 °C are preferred.

In another embodiment, the oxidising agent is directly included in the template material, for example via the synthesis solution. After the synthesis of the molecular sieve material, the material is heated, resulting in detemplation of the molecular sieve material.

In a further preferred embodiment, the process is based on a combined detemplation and ion-exchange process.

As is well-known, many commercially important reactions utilize a solid catalyst to achieve high conversion levels. This also applies to reactions with environmental applications, like removal of liquid-gas wastes from stationary facilities.

The catalysts are mainly prepared by using inorganic salts in aqueous media. There are numerous known methods for that, such as coprecipitation, ion-exchange, deposition and impregnation. Ion-exchange is particularly interesting for post-synthesis modification of molecular sieves (zeolites), resins and other exchangeable supports like alumina and silica. Most of these methods use aqueous solutions of readily soluble metal salts. As the nitrates, sulphates and chlorides are among the best soluble metal salts, often nitrates or sulphates are used. Chlorides are less often used in view of the corrosive nature of chlorides.

Ion-exchange is performed by contacting a solid support with an aqueous solution of the inorganic salts. The phenomena that take place are rather complex and far from understood by simple models. However, experimental variables like solid to liquid ratio, concentration of the salt, temperature, pH, ionic strength, can be tuned to achieve the targeted exchange level.

The present invention now may utilise a combination of the present process with ion-exchange in a very advantageous way, namely by using the dual function of the transition metal ion as catalyst and as metal to be ion-exchanged into the molecular sieve material.

The amount of metal ion is generally higher than in the case only a catalytic action is contemplated. The amounts vary with the nature of the molecular sieve and the amount of metal ion to be exchanged or grafted (anchored) into the molecular sieve lattice. Preferred amounts are between 1 ppm and 50 wt.% calculated on the basis of the weight of the molecular sieve material

The invention is now elucidated on the basis of the following, nonlimiting examples.

### EXAMPLES

The experiments were performed with a commercial BEA zeolite from TOSOH containing the template (HSZ-720KOA, Si/Al = 9.2). Thermogravimetric analysis (TGA) showed three major weight losses around 350, 700 and 900 K.

The first is due to physisorbed water, while the other two exothermal processes come from the template. Temperatures as high as 900 K are needed to completely remove the template. An Fe³⁺/H₂O₂ solution containing the desired amount of Fe to be exchanged was prepared by solving ferric nitrate in 30 *wt.* % H₂O₂.

The choice of a Fe(III) salt was based on price. The solution was stabilised by cooling down in ice since the propagation of the OH^{•} radicals is very fast, which could increase the temperature tremendously. Then the zeolite (6 g) was stirred with H₂O₂ solution (200 mL) at 353 K. To this suspension, the Fe³⁺/H₂O₂ solution was added dropwise. The removal of the template was visually observed by the evolution of a dense fog through the coil condenser. The reaction was ended after 2 h under stirring. The suspension was filtered off and the solid dried at 373 K for 2 h. The catalyst is referred as *one-pot* Fe-BEA.

The effectiveness of the detemplation was studied by TGA . The sample only presents one weight loss due to physisorbed water, while those due to the template are missing. Moreover, the amount of water in the sample (~17 *wt.%*) is significantly larger than for the original zeolite (~5 *wt.%).* This is an indirect proof that microporosity has been developed and water enters into the channels. Microporosity formation was confirmed by high resolution lowpressure Ar physisorption. The pore-size distribution, calculated according to the Saito-Foley model, applied to the adsorption branch of the isotherm., confirms the presence of microporosity in the *one-pot* catalyst. A pronounced development of a pore-size distribution between 5 and 8 Å with a maximum at 6 nm, characteristic of BEA channels (<100> 12 6.6 x 6.7** <-> [001] 12 5.6 x 5.6*), was observed.

## Claims

1. Process for the production of a molecular sieve material by growing the molecular sieve material structure in the presence of a template for the pore structure, followed by removal of the template from the molecular sieve material, in which process the template is removed by oxidation of the template material using an oxidising agent dissolved in the template material.

2. Process according to claim 1, wherein the oxidising agent is a combination of an oxidising material and a catalyst.

3. Process according to claim 1 or 2, wherein the oxidising material is selected from H₂O₂, ozone, nitroxyl compounds, such as TEMPO and peracids such as peracetic acid.

4. Process according to claim 3, wherein the oxidising agent is H₂O₂.

5. Process according to claim 2-4, wherein the catalyst is a dissolved transition metal ion or a transition metal ion exchanged or immobilized on a solid carrier.

6. Process according to claim 5, wherein the transition metal is selected from Mn, Al, Si, Pb, Hg, Cu, Fe and Zn, preferably iron.

7. Process according to claim 1-6, wherein the molecular sieve material ZSM-5, and other MFI-type structures, ferrierite (FER), beta (BEA), mordenite (MOR), USY and Y zeolites, mesoporous materials like MCM-41 and SBA-15.

8. Process according to claim 1-7, wherein the template material is selected from tetraalkylammonium hydroxide and salts, , cationic, anionic and non-ionic surfactants, alkylamines, 1,3,5-substituted benzenes, long-chain alkyls and mixtures of them.

9. Process according to claim 1-8, wherein the oxidising material and the catalyst precursor have been dissolved in a synthesis solution for the molecular sieve material.

10. Process according to claim 1-8, wherein the molecular sieve material, containing the template, is contacted with the oxidising agent.

11. Process according to claim 1-10, wherein the metal of the catalyst is exchanged or grafted into the lattice of the molecular sieve.

12. Process according to claim 1-10, wherein an additional metal in the presence of the catalyst is exchanged or grafted into the lattice of the molecular sieve.

13. Process according to claim 2-10, wherein the amount of catalyst is between 1 ppm and 50 wt.%, based on the weight of the molecular sieve material.
